# EUROPÄISCHE PATENTSCHRIFT

(11) **EP 4 552 453 B1**
(45) Veröffentlichungstag und Bekanntmachung des Hinweises auf die Patenterteilung: **11.11.2026**
(21) Anmeldenummer: 24203463.5
(22) Anmeldetag: 30.09.2024
(51) Int. Cl.: A01B 69/00, A01B 69/04, A01D 75/20

(54) **AUTONOME LANDWIRTSCHAFTLICHE ARBEITSMASCHINE**
AUTONOMOUS AGRICULTURAL WORKING MACHINE
MACHINE AGRICOLE AUTONOME

(30) Priorität: 08.11.2023 DE 102023130885
(43) Veröffentlichungstag der Anmeldung: 14.05.2025
(73) Patentinhaber: CLAAS KGaA mbH, 33428 Harsewinkel (DE)
(72) Erfinder: BONE, Sven, 49124 Georgsmarienhütte (DE); KORTHALS, Timo, 33818 Leopoldshöhe (DE); REDENIUS, Jannik, 32361 Pr. Oldendorf (DE); LÜCKE, Andreas, 33184 Altenbeken (DE); SKIBA, Andreas, 33647 Bielefeld (DE); SCHRÖDER, Axel, 33332 Gütersloh (DE)
(74) Vertreter: CLAAS Gruppe

(56) Entgegenhaltungen:
- EP-B1- 3 183 950
- DE-T5- 112022 000 212
- US-A1- 2018 084 708

## Beschreibung

Die vorliegende Erfindung betrifft eine autonome landwirtschaftliche Arbeitsmaschine für einen landwirtschaftlichen Einsatz auf einem landwirtschaftlichen Feld.

In der modernen Landwirtschaft sind vermehrt Bestrebungen dahingehend zu erkennen, Arbeitseinsätze autonom durchzuführen, um die Produktivität und Wirtschaftlichkeit der Prozesse zu erhöhen. Hierfür kommen sogenannte autonome landwirtschaftliche Arbeitsmaschinen zum Einsatz, die sich dadurch auszeichnen, dass diese Arbeitsmaschinen einen teilautonomen Betriebsmodus und/oder einen vollautonomen Betriebsmodus aufweisen. Während des teilautonomen Betriebsmodus befindet sich zwar ein Bediener in einer Kabine der landwirtschaftlichen Arbeitsmaschine, jedoch ist dieser Bediener nicht mehr in den Steuer- und Regelprozess der jeweiligen landwirtschaftlichen Arbeitsmaschine eingebunden. Hierbei kann die autonome landwirtschaftliche Arbeitsmaschine zwischen dem teilautonomen Betriebsmodus und dem Normalbetrieb, dem manuellen Fahren, wechseln.

Der vollautonome Betriebsmodus kennzeichnet sich dadurch, dass der landwirtschaftlichen Arbeitsmaschine kein Bediener zugeordnet ist. Demnach steht beim vollautonomen Betriebsmodus kein Bediener zur Verfügung, der einen durchzuführenden landwirtschaftlichen Arbeitsablauf mit einer Abfolge von verschiedenen Arbeitsschritten kennt und einzelne Steuerfunktionen während des Betriebs der Arbeitsmaschine auf einem landwirtschaftlichen Feld ausführen bzw. beauftragen kann.

Die autonome landwirtschaftliche Arbeitsmaschine weist ein Sensorsystem zur Erfassung einer digitalen Abbildung des Umgebungsbereiches auf. Ferner weist die autonome landwirtschaftliche Arbeitsmaschine eine Einstellvorrichtung auf, die dazu vorgesehen und eingerichtet ist, die Betriebssituation der autonomen landwirtschaftlichen Arbeitsmaschine u.a. mittels der digitalen Abbildung zu ermitteln und darauf basierend die autonome landwirtschaftliche Arbeitsmaschine bezüglich der Betriebssituation optimal einzustellen.

Das Dokument DE 11 2022 000212 T5 offenbart einen Ansatz zur Vertrauensbildung mit Hilfe eines neuronalen Netzes.

Das Dokument US 2018/084708 A1 offenbart eine landwirtschaftliche Arbeitsmaschine zur Vermeidung von Anomalitäten.

Das Dokument EP 3 183 950 B1 offenbart ein landwirtschaftliches Arbeitsgerät und ein Verfahren zur Tiererkennung.

Der vorliegenden Erfindung liegt die Aufgabe zugrunde, eine Ausführungsform der autonomen landwirtschaftlichen Arbeitsmaschine anzugeben, die durchgängig einen sicheren Einsatz gewährleistet.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass die Einstellvorrichtung mehrere Verarbeitungskanäle zur Verarbeitung der digitalen Abbildung für die Ermittlung der Betriebssituation der autonomen landwirtschaftlichen Arbeitsmaschine aufweist, wobei die Einstellvorrichtung dazu vorgesehen und eingerichtet ist, dass einer der Verarbeitungskanäle einen Sicherheitskanal ausbildet, der ausschließlich für eine Situationsanalyse bezüglich des Vorhandenseins eines Menschen im Umgebungsbereich der autonomen landwirtschaftlichen Arbeitsmaschine verwendet wird.

Die Verarbeitungskanäle können die Daten der digitalen Abbildung parallel verarbeiten. Ein Verarbeitungskanal kann ein Funktionsblock innerhalb einer Auswertungseinheit der Einstellvorrichtung sein, wobei der Funktionsblock die digitale Abbildung verarbeitet. Hierbei kann jeder Verarbeitungskanal eigene Hardwarebausteine aufweisen.

Da einer der Verarbeitungskanäle ausschließlich für die Situationsanalyse eingesetzt wird, wird sichergestellt, dass Situationen, in denen Menschen im Umgebungsbereich der autonomen landwirtschaftlichen Arbeitsmaschine auftauchen, in keinem Fall übersehen werden. Hierdurch werden Menschen im Umgebungsbereich der autonomen landwirtschaftlichen Arbeitsmaschine aktiv geschützt.

Die Einstellvorrichtung kann eine Steuer- und/oder Regelvorrichtung zur Steuerung und/oder Regelung der autonomen landwirtschaftlichen Arbeitsmaschine, insbesondere Komponenten der Arbeitsmaschine und/oder des gekoppelten Anbaugerätes, ausbilden. Hierfür kann die Einstellvorrichtung entsprechende Einstellsignale, insbesondere Steuer- und/oder Regelsignale, erzeugen und einstellungstechnisch verwenden.

Die autonome landwirtschaftliche Arbeitsmaschine kann einen teilautonomen Betriebsmodus und/oder einen vollautonomen Betriebsmodus während des landwirtschaftlichen Einsatzes verwenden. Eine autonome landwirtschaftliche Arbeitsmaschine, die einen teilautonomen Betriebsmodus aufweist, kann eine Fahrerkabine umfassen. Eine autonome landwirtschaftliche Arbeitsmaschine, die einen vollautonomen Betriebsmodus aufweist, kann ohne eine Fahrerkabine ausgebildet sein. Eine autonome landwirtschaftliche Arbeitsmaschine, die einen teilautonomen Betriebsmodus als auch einen vollautonomen Betriebsmodus aufweist, kann eine lösbar koppelbare Fahrerkabine aufweisen.

Gemäss der erfindungsgemäßen Lösung ist vorgesehen, dass die Einstellvorrichtung dazu eingerichtet ist, dass der Sicherheitskanal stets für die Situationsanalyse bezüglich des Vorhandenseins eines Menschen freigehalten wird. Hierdurch wird weiter gesichert, dass Menschen im Umgebungsbereich der autonomen landwirtschaftlichen Arbeitsmaschine aktiv, ununterbrochen und optimal geschützt werden.

Gemäss der erfindungsgemäßen Lösung ist vorgesehen, dass der Sicherheitskanal ausschließlich für eine Situationsanalyse bezüglich des Vorhandenseins eines Menschen im Umgebungsbereich der autonomen landwirtschaftlichen Arbeitsmaschine verwendet wird. Während des Einsatzes der autonomen landwirtschaftlichen Arbeitsmaschine hat die Sicherheit von Menschen, die sich ggf. in der Nähe der Arbeitsmaschine befinden, die höchste Priorität. Da der Sicherheitskanal ausschließlich das Vorhandensein von Menschen prüft, werden im Umgebungsbereich vorhandene Menschen schnellstmöglich erkannt und somit optimal geschützt.

Bei einer vorteilhaften Weiterbildung der erfindungsgemäßen Lösung ist vorgesehen, dass mittels der Situationsanalyse ermittelt wird, ob eine kritische Situation vorliegt, in der ein Mensch, vorhanden ist. Dies kann beispielsweise vorsehen, dass der Abstand der autonomen landwirtschaftlichen Arbeitsmaschine zum Menschen, ermittelt wird. Falls der Mensch ausreichend weit von der autonomen landwirtschaftlichen Arbeitsmaschine entfernt ist, kann ein langsames abbremsen und/oder eine Fahrrichtungsänderung erfolgen, während bei einer kritischen Entfernung innerhalb eines Gefahrenbereiches eine sofortige Notbremsung durchgeführt wird, um den Mensch zu schützen.

Bei einer vorteilhaften Weiterbildung der erfindungsgemäßen Lösung ist vorgesehen, dass mit der Situationsanalyse eine Wahrscheinlichkeit bezüglich des Vorhandenseins eines Menschen, ermittelt wird. Je höher die Wahrscheinlichkeit bezüglich des Vorhandenseins ist, desto relevanter und kritischer ist diese Information für die Einstellvorrichtung der autonomen landwirtschaftlichen Arbeitsmaschine.

Bei einer vorteilhaften Weiterbildung der erfindungsgemäßen Lösung ist vorgesehen, dass die Einstellvorrichtung dazu eingerichtet ist, dass einer der Verarbeitungskanäle, der nicht der Sicherheitskanal ist, zur geometrischen Objektdetektion verwendet wird.

Bei einer vorteilhaften Weiterbildung der erfindungsgemäßen Lösung ist vorgesehen, dass die Einstellvorrichtung dazu eingerichtet ist, dass einer der Verarbeitungskanäle, der nicht den Sicherheitskanal ausbildet, zur Objektklassifikation verwendet wird.

Bei einer vorteilhaften Weiterbildung der erfindungsgemäßen Lösung ist vorgesehen, dass die Einstellvorrichtung dazu eingerichtet ist, dass einer der Verarbeitungskanäle, der nicht den Sicherheitskanal ausbildet, zur semantischen Objektklassifikation verwendet wird.

Diese weniger kritische Hinderniserkennung, also die geometrischen Objektdetektion und/oder die Objektklassifikation, ist in der Lage, den größten Teil der Umgebung wahrzunehmen und erfasste Objekte (z.B. Anlage, Fahrzeug, Mensch, Strommast) zu kategorisieren. Abhängig von den Ergebnissen dieser Hinderniserkennung löst die Einstellvorrichtung eine Vorausplanung aus, um solche Hindernisse zu umfahren, um vor diesen Hindernissen anzuhalten oder um durch die Hindernisse zu fahren, falls diese Hindernisse z.B. Pflanzen sind.

Bei einer vorteilhaften Weiterbildung der erfindungsgemäßen Lösung ist vorgesehen, dass das Sensorsystem dazu eingerichtet ist, den Umgebungsbereich autonomen landwirtschaftlichen Arbeitsmaschine vollständig zu erfassen. Mit anderen Worten ausgedrückt, kann das Sensorsystem dazu vorgesehen und eingerichtet sein, eine 360° Umfeldüberwachung zu ermöglichen. Hierfür kann das Sensorsystem mehrere Sensoreinheiten umfassen.

Bei einer vorteilhaften Weiterbildung der erfindungsgemäßen Lösung ist vorgesehen, dass das Sensorsystem ein Lidarsystem, ein Kamerasystem und/oder ein Radarsystem aufweist.

Bei einer vorteilhaften Weiterbildung der erfindungsgemäßen Lösung ist vorgesehen, dass die autonome landwirtschaftliche Arbeitsmaschine als Traktor ausgebildet ist. Ferner kann ein Anbaugerät lösbar an diesem Traktor gekoppelt sein.

Bei einer vorteilhaften Weiterbildung der erfindungsgemäßen Lösung ist vorgesehen, dass die autonome landwirtschaftliche Arbeitsmaschine eine Fahrerkabine für einen Fahrer aufweist.

Bei einer vorteilhaften Weiterbildung der erfindungsgemäßen Lösung ist vorgesehen, dass die Einstellvorrichtung dazu eingerichtet ist, in Abhängigkeit der mittels der Verarbeitungskanäle ermittelten Betriebssituationen entsprechende Einstellsignale zur Einstellung der autonomen landwirtschaftlichen Arbeitsmaschine zu erzeugen, wobei die Einstellvorrichtung zusätzlich dazu eingerichtet ist, dass falls gemäß dem Sicherheitskanal ein Mensch, im Umgebungsbereich der autonomen landwirtschaftlichen Arbeitsmaschine vorhanden ist, dass dem Einstellsignal zum Stoppen und/oder vollständigen Abschalten der autonomen Arbeitsmaschine gefolgt wird, während alle anderen Einstellsignale in diesem Fall ignoriert werden.

Hierfür kann die Einstellvorrichtung Rechenvorrichtung, insbesondere eine computerbasierte Rechenvorrichtung, und/oder einen Datenspeicher, insbesondere eine computerlesbaren Datenspeicher, aufweisen.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder ähnliche oder funktional gleiche Komponenten beziehen.

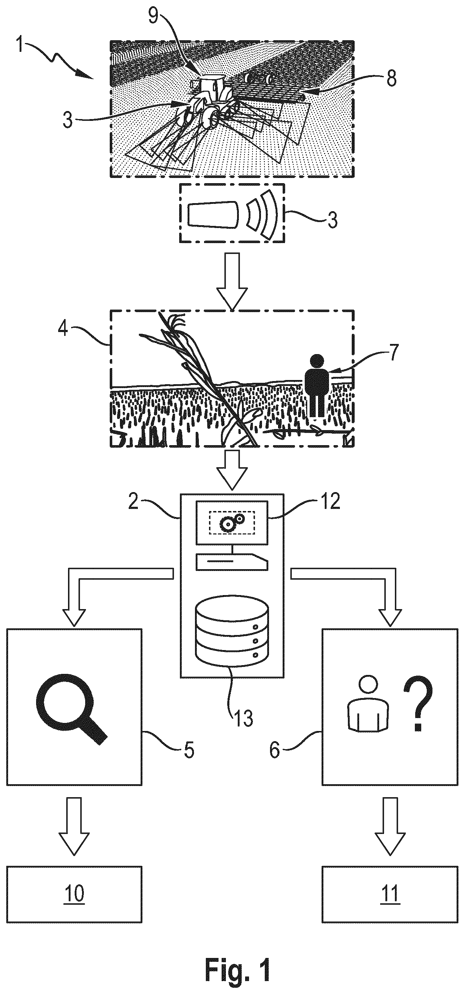

Fig. 1 zeigt u.a. einen landwirtschaftlichen Einsatz einer erfindungsgemäßen autonomen landwirtschaftlichen Arbeitsmaschine 1 auf einem landwirtschaftlichen Feld. An der autonomen landwirtschaftlichen Arbeitsmaschine 1 ist ein für den landwirtschaftlichen Einsatz erforderliches Anbaugerät 8 lösbar gekoppelt. Diese autonome landwirtschaftliche Arbeitsmaschine 1 ist beispielhaft als Traktor mit einer Fahrerkabine 9 im vollautonomen Betriebsmodus dargestellt, sodass sich während des dargestellten landwirtschaftlichen Einsatzes kein Fahrer in dieser Fahrerkabine 9 befindet.

An der autonomen landwirtschaftlichen Arbeitsmaschine 1 ist wenigstens ein Sensorsystem 3 angeordnet, welches dazu vorgesehen und eingerichtet ist, eine digitale Abbildung 4 eines Umgebungsbereiches der autonomen landwirtschaftlichen Arbeitsmaschine 1 zu erfassen und an eine Einstellvorrichtung 2 der autonomen landwirtschaftlichen Arbeitsmaschine 1 datentechnisch zu übermitteln. Dieses Sensorsystem 3 kann dazu vorgesehen und eingerichtet sein, den Umgebungsbereich der autonomen landwirtschaftlichen Arbeitsmaschine 1 vollständig zu erfassen. Insbesondere kann das Sensorsystem 3 mehrere Lidarsysteme, mehrere Kamerasysteme und/oder mehrere Radarsysteme aufweisen.

Die Einstellvorrichtung 2 der autonomen landwirtschaftlichen Arbeitsmaschine 1 ist dazu eingerichtet, die Betriebssituation der autonomen landwirtschaftlichen Arbeitsmaschine 1 zu ermitteln und die autonome landwirtschaftliche Arbeitsmaschine 1 in Abhängigkeit dieser ermittelten Betriebssituation einzustellen. Hierfür weist die Einstellvorrichtung 2 u.a. eine computerbasierte Rechenvorrichtung 12 und einen computerlesbaren Datenspeicher 13 auf.

Diese Einstellvorrichtung 2 bildet erfindungsgemäß mehrere Verarbeitungskanäle 5, 6 zur Verarbeitung der digitalen Abbildung 4 für die Ermittlung der Betriebssituation aus, wobei einer dieser Verarbeitungskanäle 5, 6 einen Sicherheitskanal 6 ausbildet, der ausschließlich für eine Situationsanalyse bezüglich des Vorhandenseins eines lebenden Objektes 7 im Umgebungsbereich der autonomen landwirtschaftlichen Arbeitsmaschine 1 eingesetzt wird.

Diese Verarbeitungskanäle 5, 6 können die Daten der digitalen Abbildung 4 parallel computertechnisch verarbeiten. Ein Verarbeitungskanal 5, 6 kann ein Funktionsblock innerhalb einer Auswertungseinheit der Einstellvorrichtung 2 sein, wobei der Funktionsblock die digitale Abbildung 4 verarbeitet, wobei jeder Verarbeitungskanal 5, 6 eigene Hardwarebausteine aufweisen kann, aber nicht muss.

Die Einstellvorrichtung 2 ist dazu vorgesehen und eingerichtet, dass der Sicherheitskanal 6 stets für die Situationsanalyse bezüglich des Vorhandenseins eines Menschen freigehalten wird.

Da einer der Verarbeitungskanäle 5, 6 ausschließlich für eine Situationsanalyse eingesetzt wird, wird sichergestellt, dass Situationen, in denen Menschen im Umgebungsbereich der autonomen landwirtschaftlichen Arbeitsmaschine 1 auftauchen, in keinem Fall übersehen werden. Hierdurch wird weiter gesichert, dass Menschen im Umgebungsbereich der autonomen landwirtschaftlichen Arbeitsmaschine 1 aktiv, ununterbrochen und optimal geschützt werden.

Wie es in der digitalen Abbildung 4 der Fig. 1 dargestellt ist, kann in der Nähe der Arbeitsmaschine 1 ein Mensch sein, dessen Sicherheit die höchste Priorität hat. Daher wird der Sicherheitskanal 6 ausschließlich für eine Situationsanalyse bezüglich des Vorhandenseins eines Menschen 7 im Umgebungsbereich der autonomen landwirtschaftlichen Arbeitsmaschine 1 verwendet. Mittels der Situationsanalyse des Sicherheitskanals 6 wird ermittelt, ob eine kritische Situation vorliegt, in der ein Mensch 7 vorhanden ist. Zusätzlich oder alternativ kann Mittels der Situationsanalyse des Sicherheitskanals 6 eine Wahrscheinlichkeit bezüglich des Vorhandenseins eines Menschen 7 bestimmt werden.

Die Verarbeitungskanäle 5, die nicht den Sicherheitskanal 6 ausbilden, können zur geometrischen Objektdetektion und/oder zur Objektklassifikation und/oder zur semantischen Objektklassifikation eingesetzt werden.

Die Einstellvorrichtung 2 ist dazu vorgesehen und eingerichtet, in Abhängigkeit der mittels der Verarbeitungskanäle 5, 6 ermittelten Betriebssituationen entsprechende Einstellsignale 10, 11 zur Einstellung der autonomen landwirtschaftlichen Arbeitsmaschine 1 zu erzeugen, wobei die Einstellvorrichtung 2 zusätzlich dazu vorgesehen und eingerichtet ist, falls gemäß dem Sicherheitskanal 6 ein Mensch 7 im Umgebungsbereich der autonomen landwirtschaftlichen Arbeitsmaschine 1 vorhanden ist, dass dem Einstellsignal 11 zum Stoppen und/oder vollständigen Abschalten der autonomen Arbeitsmaschine 1 gefolgt wird, während alle anderen Einstellsignale 10 in diesem Fall ignoriert werden.

Da der Sicherheitskanal 6 ausschließlich das Vorhandensein von Menschen 7 prüft, werden im Umgebungsbereich vorhandene Menschen 7 schnellstmöglich erkannt und somit optimal geschützt.

### Bezugszeichenliste

- 1: Autonome landwirtschaftliche Arbeitsmaschine
- 2: Einstellvorrichtung
- 3: Sensorsystem
- 4: digitale Abbildung
- 5: Verarbeitungskanal
- 6: Verarbeitungskanal als Sicherheitskanal
- 7: Mensch
- 8: Anbaugerät
- 9: Fahrerkabine
- 10: Einstellsignal
- 11: Einstellsignal
- 12: Rechenvorrichtung
- 13: Datenspeicher

## Patentansprüche

1. Autonome landwirtschaftliche Arbeitsmaschine (1)
- mit einer Einstellvorrichtung (2) innerhalb der autonomen landwirtschaftlichen Arbeitsmaschine (1), die dazu vorgesehen und eingerichtet ist, eine Betriebssituation der autonomen landwirtschaftlichen Arbeitsmaschine (1) zu ermitteln und die autonome landwirtschaftliche Arbeitsmaschine (1) in Abhängigkeit der ermittelten Betriebssituation einzustellen,
- mit einem an der autonomen landwirtschaftlichen Arbeitsmaschine (1) angeordneten Sensorsystem (3) zur Erfassung einer digitalen Abbildung (4) eines Umgebungsbereiches der autonomen landwirtschaftlichen Arbeitsmaschine (1),
**dadurch gekennzeichnet,**
- **dass** die Einstellvorrichtung (2) mehrere Verarbeitungskanäle (5, 6) zur Verarbeitung der digitalen Abbildung (4) für die Ermittlung der Betriebssituation der autonomen landwirtschaftlichen Arbeitsmaschine (1) aufweist,
- wobei die Einstellvorrichtung (2) dazu vorgesehen und eingerichtet ist, dass einer der Verarbeitungskanäle (5, 6) einen Sicherheitskanal (6) ausbildet, der ausschließlich für eine Situationsanalyse bezüglich des Vorhandenseins eines Menschen (7) im Umgebungsbereich der autonomen landwirtschaftlichen Arbeitsmaschine (1) verwendet wird.

2. Autonome Arbeitsmaschine (1) nach Anspruch 1,
**dadurch gekennzeichnet,**
**dass** die Einstellvorrichtung (2) dazu vorgesehen und eingerichtet ist, dass der Sicherheitskanal (6) stets für die Situationsanalyse bezüglich des Vorhandenseins eines Menschen (7) freigehalten wird.

3. Autonome Arbeitsmaschine (1) nach einem der vorhergehenden Ansprüche,
**dadurch gekennzeichnet,**
**dass** mittels der Situationsanalyse ermittelt wird, ob eine kritische Situation vorliegt, in der ein Mensch (7) vorhanden ist.

4. Autonome Arbeitsmaschine (1) nach einem der vorhergehenden Ansprüche,
**dadurch gekennzeichnet,**
**dass** mit der Situationsanalyse eine Wahrscheinlichkeit bezüglich des Vorhandenseins eines Menschen (7), ermittelt wird.

5. Autonome Arbeitsmaschine (1) nach einem der vorhergehenden Ansprüche,
**dadurch gekennzeichnet,**
**dass** die Einstellvorrichtung (2) dazu vorgesehen und eingerichtet ist, dass einer der Verarbeitungskanäle (5), der nicht der Sicherheitskanal (6) ist, zur geometrischen Objektdetektion verwendet wird.

6. Autonome Arbeitsmaschine (1) nach einem der vorhergehenden Ansprüche,
**dadurch gekennzeichnet,**
**dass** die Einstellvorrichtung (2) dazu vorgesehen und eingerichtet ist, dass einer der Verarbeitungskanäle (5), der nicht den Sicherheitskanal (6) ausbildet, zur Objektklassifikation verwendet wird.

7. Autonome Arbeitsmaschine (1) nach einem der vorhergehenden Ansprüche,
**dadurch gekennzeichnet,**
**dass** die Einstellvorrichtung (2) dazu vorgesehen und eingerichtet ist, dass einer der Verarbeitungskanäle (5), der nicht den Sicherheitskanal (6) ausbildet, zur semantischen Objektklassifikation verwendet wird.

8. Autonome Arbeitsmaschine (1) nach einem der vorhergehenden Ansprüche,
**dadurch gekennzeichnet,**
**dass** das Sensorsystem (3) dazu vorgesehen und eingerichtet ist, den Umgebungsbereich der autonomen landwirtschaftlichen Arbeitsmaschine (1) vollständig zu erfassen.

9. Autonome Arbeitsmaschine (1) nach einem der vorhergehenden Ansprüche,
**dadurch gekennzeichnet,**
**dass** das Sensorsystem (3) ein Kamerasystem aufweist.

10. Autonome Arbeitsmaschine (1) nach einem der vorhergehenden Ansprüche,
**dadurch gekennzeichnet,**
**dass** das Sensorsystem (3) ein Lidarsystem aufweist.

11. Autonome Arbeitsmaschine (1) nach einem der vorhergehenden Ansprüche,
**dadurch gekennzeichnet,**
**dass** das Sensorsystem (3) ein Radarsystem aufweist.

12. Autonome Arbeitsmaschine (1) nach einem der vorhergehenden Ansprüche,
**dadurch gekennzeichnet,**
**dass** die Arbeitsmaschine (1) als Traktor ausgebildet ist.

13. Autonome Arbeitsmaschine (1) nach einem der vorhergehenden Ansprüche,
**dadurch gekennzeichnet,**
**dass** die Arbeitsmaschine (1) eine Fahrerkabine (9) aufweist.

14. Autonome Arbeitsmaschine (1) nach einem der vorhergehenden Ansprüche,
**dadurch gekennzeichnet,**
- **dass** die Einstellvorrichtung (2) dazu vorgesehen und eingerichtet ist, in Abhängigkeit der mittels der Verarbeitungskanäle (5, 6) ermittelten Betriebssituationen entsprechende Einstellsignale (10, 11) zur Einstellung der autonomen landwirtschaftlichen Arbeitsmaschine (1) zu erzeugen,
- wobei die Einstellvorrichtung (2) zusätzlich dazu vorgesehen und eingerichtet ist, dass falls gemäß dem Sicherheitskanal (6) ein Mensch (7) im Umgebungsbereich der autonomen landwirtschaftlichen Arbeitsmaschine (1) vorhanden ist, dass dem Einstellsignal (11) zum Stoppen und/oder vollständigen Abschalten der autonomen Arbeitsmaschine (1) gefolgt wird, während alle anderen Einstellsignale (10) in diesem Fall ignoriert werden.

## Claims

1. Autonomous agricultural working machine (1)
- with a setting device (2) within the autonomous agricultural working machine (1) which is intended and designed to determine an operating situation of the autonomous agricultural working machine (1) and to set the autonomous agricultural working machine (1) in dependence on the operating situation determined,
- with a sensor system (3) arranged on the autonomous agricultural working machine (1) for detecting a digital image (4) of a surrounding area of the autonomous agricultural working machine (1),
**characterized**
- **in that** the setting device (2) has a number of processing channels (5, 6) for processing the digital image (4) for the determination of the operating situation of the autonomous agricultural working machine (1),
- wherein the setting device (2) is intended and designed such that one of the processing channels (5, 6) forms a safety channel (6), which is used exclusively for a situation analysis with respect to the presence of a person (7) in the surrounding area of the autonomous agricultural working machine (1).

2. Autonomous working machine (1) according to Claim 1,
**characterized**
**in that** the setting device (2) is intended and designed such that the safety channel (6) is always kept clear for the situation analysis with respect to the presence of a person (7).

3. Autonomous working machine (1) according to one of the preceding claims,
**characterized**
**in that** the situation analysis is used to determine whether there is a critical situation in which a person (7) is present.

4. Autonomous working machine (1) according to one of the preceding claims,
**characterized**
**in that** the situation analysis is used to determine a probability of the presence of a person (7).

5. Autonomous working machine (1) according to one of the preceding claims,
**characterized**
**in that** the setting device (2) is intended and designed such that one of the processing channels (5), which is not the safety channel (6), is used for geometric object detection.

6. Autonomous working machine (1) according to one of the preceding claims,
**characterized**
**in that** the setting device (2) is intended and designed such that one of the processing channels (5), which does not form the safety channel (6), is used for object classification.

7. Autonomous working machine (1) according to one of the preceding claims,
**characterized**
**in that** the setting device (2) is intended and designed such that one of the processing channels (5), which does not form the safety channel (6), is used for semantic object classification.

8. Autonomous working machine (1) according to one of the preceding claims,
**characterized**
**in that** the sensor system (3) is intended and designed to fully detect the surrounding area of the autonomous agricultural working machine (1).

9. Autonomous working machine (1) according to one of the preceding claims,
**characterized**
**in that** the sensor system (3) has a camera system.

10. Autonomous working machine (1) according to one of the preceding claims,
**characterized**
**in that** the sensor system (3) has a lidar system.

11. Autonomous working machine (1) according to one of the preceding claims,
**characterized**
**in that** the sensor system (3) has a radar system.

12. Autonomous working machine (1) according to one of the preceding claims,
**characterized**
**in that** the working machine (1) takes the form of a tractor.

13. Autonomous working machine (1) according to one of the preceding claims,
**characterized**
**in that** the working machine (1) has a driver's cab (9).

14. Autonomous working machine (1) according to one of the preceding claims,
**characterized**
- **in that** the setting device (2) is intended and designed to produce in dependence on the operating situations determined by means of the processing channels (5, 6) corresponding setting signals (10, 11) for setting the autonomous agricultural working machine (1),
- wherein the setting device (2) is additionally intended and designed such that, if according to the safety channel (6) a person (7) is present in the surrounding area of the autonomous agricultural working machine (1), the setting signal (11) to stop and/or completely switch off the autonomous working machine (1) is followed, while all other setting signals (10) are in this case ignored.

## Revendications

1. Machine de travail agricole autonome (1)
- avec un dispositif de réglage (2) à l'intérieur de la machine de travail agricole autonome (1), qui est prévu et mis au point pour déterminer une situation de fonctionnement de la machine de travail agricole autonome (1) et pour régler la machine de travail agricole autonome (1) en fonction de la situation de fonctionnement déterminée,
- avec un système de détection (3) disposé sur la machine de travail agricole autonome (1) destiné à détecter une image numérique (4) d'une zone environnante de la machine de travail agricole autonome (1), **caractérisée en ce**
- **que** le dispositif de réglage (2) comporte plusieurs canaux de traitement (5, 6) pour le traitement de l'image numérique (4) pour déterminer la situation de fonctionnement de la machine de travail agricole autonome (1),
- le dispositif de réglage (2) étant prévu et mis au point pour que l'un des canaux de traitement (5, 6) forme un canal de sécurité (6), qui est utilisé exclusivement pour une analyse de situation concernant la présence d'un être humain (7) dans la zone environnante de la machine de travail agricole autonome (1).

2. Machine de travail agricole autonome (1) selon la revendication 1,
**caractérisée en ce**
**que** le dispositif de réglage (2) est prévu et mis au point pour que le canal de sécurité (6) reste toujours libre pour l'analyse de situation en ce qui concerne la présence d'un être humain (7).

3. Machine de travail agricole autonome (1) selon l'une des revendications précédentes,
**caractérisée en ce**
**que** l'analyse de situation permet de déterminer si une situation critique, dans laquelle un être humain (7) se trouve, est de mise.

4. Machine de travail agricole autonome (1) selon l'une des revendications précédentes,
**caractérisée en ce**
**qu'**une probabilité en ce qui concerne la présence d'un être humain (7) est déterminée avec l'analyse de situation.

5. Machine de travail agricole autonome (1) selon l'une des revendications précédentes,
**caractérisée en ce**
**que** le dispositif de réglage (2) est prévu et mis au point pour utiliser un des canaux de traitement (5), qui n'est pas le canal de sécurité (6), pour la détection géométrique d'objets.

6. Machine de travail agricole autonome (1) selon l'une des revendications précédentes,
**caractérisée en ce**
**que** le dispositif de réglage (2) est prévu et mis au point pour utiliser un des canaux de traitement (5), qui ne forme pas le canal de sécurité (6), pour la classification d'objets.

7. Machine de travail agricole autonome (1) selon l'une des revendications précédentes,
**caractérisée en ce**
**que** le dispositif de réglage (2) est prévu et mis au point pour utiliser un des canaux de traitement (5), qui ne forme pas le canal de sécurité (6), pour la classification sémantique d'objets.

8. Machine de travail agricole autonome (1) selon l'une des revendications précédentes,
**caractérisée en ce**
**que** le système de détection (3) est prévu et mis au point pour détecter complètement la zone environnante de la machine de travail agricole autonome (1).

9. Machine de travail agricole autonome (1) selon l'une des revendications précédentes,
**caractérisée en ce**
**que** le système de détection (3) comporte un système de caméra.

10. Machine de travail agricole autonome (1) selon l'une des revendications précédentes,
**caractérisée en ce**
**que** le système de détection (3) comporte un système lidar.

11. Machine de travail agricole autonome (1) selon l'une des revendications précédentes,
**caractérisée en ce**
**que** le système de détection (3) comporte un système radar.

12. Machine de travail agricole autonome (1) selon l'une des revendications précédentes,
**caractérisée en ce**
**que** la machine de travail (1) est formée comme un tracteur.

13. Machine de travail agricole autonome (1) selon l'une des revendications précédentes,
**caractérisée en ce**
**que** la machine de travail (1) comporte une cabine de conduite (9).

14. Machine de travail agricole autonome (1) selon l'une des revendications précédentes,
**caractérisée en ce**
- **que** le dispositif de réglage (2) est prévu et mis au point pour générer des signaux de réglage (10, 11) correspondants pour régler la machine de travail agricole autonome (1) en fonction des situations de fonctionnement déterminées au moyen des canaux de traitement (5, 6),
- le dispositif de réglage (2) étant prévu et mis au point en supplément pour que, dans le cas où un être humain (7) se trouve dans la zone environnante de la machine de travail agricole autonome (1) selon le canal de sécurité (6), le signal de réglage (11) est suivi pour arrêter et/ou mettre hors circuit complètement la machine de travail autonome (1), tandis que tous les autres signaux de réglage (10) sont ignorés dans ce cas.
